# EUROPÄISCHE PATENTANMELDUNG

(11) **EP 3 336 302 A1**
(43) Veröffentlichungstag der Anmeldung: **20.06.2018**
(21) Anmeldenummer: 16204748.4
(22) Anmeldetag: 16.12.2016
(51) Int. Cl.: E21B 10/44, B28D 1/14, B23B 51/00

(54) **BOHRER**

(71) Anmelder: HILTI Aktiengesellschaft, 9494 Schaan (LI)
(72) Erfinder: Meierhofer, Markus, 9472 Grabs (CH)
(74) Vertreter: Hilti Aktiengesellschaft Corporate Intellectual Property

(57) **Zusammenfassung**

Ein Bohrkopf **2** für einen Bohrer **1** hat eine Oberseite **9** zum Abbauen von mineralischem Material, eine Unterseite **10** zum Befestigen an einem Schaft **3** des Bohrers **1,** und eine Drehachse **6,** welche zentrisch durch die Oberseite **9** und die Unterseite **10** verläuft. Der Bohrkopf **2** hat Arme **15,** die jeweils ein zu der Drehachse **6** proximales Ende **18** und zu der Drehachse **6** distales Ende **19** aufweisen, und wobei die Oberseiten **9** der Arme **15** jeweils in Richtung von dem proximalen Ende **18** zu dem distalen Ende **19** verlaufende primäre Meißelkanten **13** aufweisen. Wenigstens einer, vorzugsweise wenigstens zwei, der Arme **15** weisen an der Oberseite **9** eine längs der primären Meißelkante **13** verlaufende sekundäre Meißelkante **27** auf.

## Beschreibung

### GEBIET DER ERFINDUNG

Die vorliegende Erfindung betrifft einen Bohrer zum schlagenden Abbau von mineralischen Bauwerkstoffen.

Ein Bohrer zum schlagenden Abbau von mineralischen Bauwerkstoffen ist beispielsweise aus EP1604793 A1 bekannt.

### OFFENBARUNG DER ERFINDUNG

Der erfindungsgemäße Bohrkopf für einen Bohrer hat eine Oberseite zum Abbauen von mineralischem Material, eine Unterseite zum Befestigen an einem Schaft des Bohrers, und eine Drehachse, welche zentrisch durch die Oberseite und die Unterseite verläuft. Der Bohrkopf hat Arme, die jeweils ein zu der Drehachse proximales Ende und zu der Drehachse distales Ende aufweisen, und wobei die Oberseiten der Arme jeweils in Richtung von dem proximalen Ende zu dem distalen Ende verlaufende primäre Meißelkanten aufweisen. Wenigstens einer, vorzugsweise wenigstens zwei, der Arme weisen an der Oberseite eine längs der primären Meißelkante verlaufende sekundäre Meißelkante auf. Die sekundäre Meißelkante begünstigt den Abbau von Stahl-Armierungen in dem Gestein.

In einer bevorzugten Ausgestaltung beginnen die primäre Meißelkante und die sekundäre Meißelkante desselben Arms an dem distalen Ende des Arms. Der Abbau der Armierungen wird im Gegensatz zu dem Abbau des mineralischen Materials durch die äußeren Bereiche des Bohrkopfs dominiert.

Eine Ausgestaltung sieht vor, dass die primäre Meißelkante gegenüber der sekundären Meißelkante desselben Arms in Schlagrichtung durchgehend übersteht, d.h. höher ist. Die sekundäre Meißelkante kommt bei dem perkussiven Abbau etwas später als die primäre Meißelkante mit dem Material in Kontakt. Die primäre Meißelkante beginnt einen Teil der Armierung abzuscheren, welchen die sekundäre Meißelkante dann umbiegen kann.

Eine Ausgestaltung sieht vor, dass die primäre Meißelkante gegenüber der sekundären Meißelkante desselben Arms in einer Drehrichtung des Bohrkopfs vorauslaufend versetzt ist.

Eine Ausgestaltung sieht vor, dass der ein Winkel zwischen der primären Meißelkante und der sekundären Meißelkante desselben Arms geringer als 8 Grad ist. Die beiden Meißelkanten sind ausreichen nahe, damit die sekundäre Meißelkante den Metallspan aufnehmen kann.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer,
- Fig. 2: einen Bohrkopf,

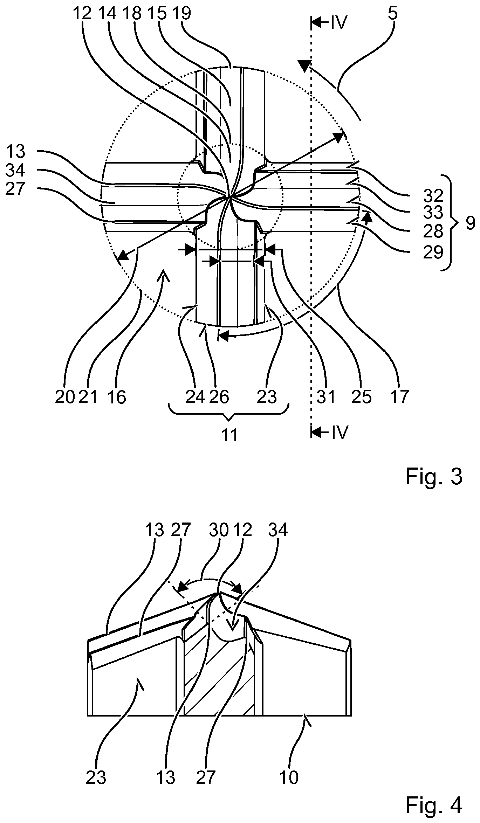

- Fig. 3: eine Draufsicht auf den Bohrkopf,
- Fig. 4: eine Schnitt durch einen Arm des Bohrkopfs,
- Fig. 5: eine Draufsicht auf den Bohrkopf,
- Fig. 6: eine Schnitt durch einen Arm des Bohrkopfs,
- Fig. 7: eine Draufsicht auf den Bohrkopf

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

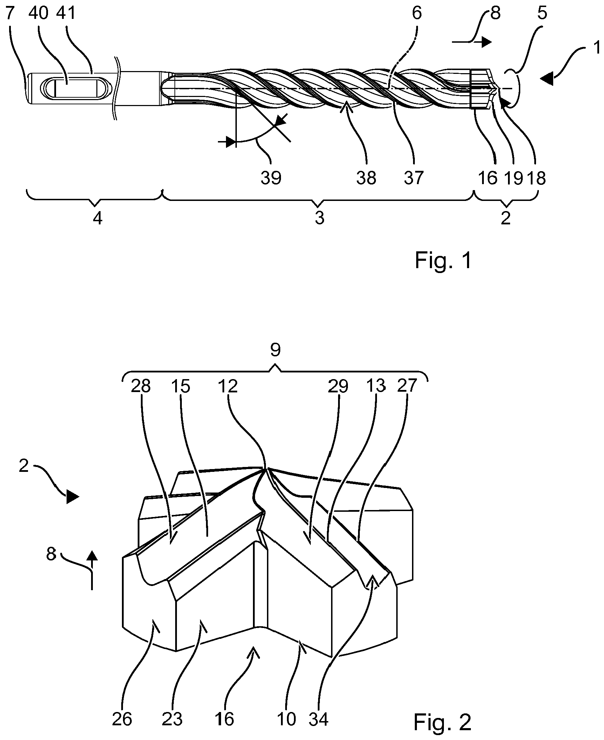

Fig. 1 zeigt einen beispielhaften Bohrer **1.** Der Bohrer **1** hat einen Bohrkopf **2,** eine Wendel **3** und ein Einsteckende **4.** Der Bohrer **1** ist für den Abbau von mineralischen Werkstoffen, insbesondere für den Abbau von armiertem Beton, ausgelegt. Der Bohrer **1** wird im Betrieb in einem Drehrichtung **5** um seine Längsachse **6** (Drehachse) gedreht. Die typische Drehrichtung **5** ist bei einem Blick auf den Bohrkopf **2** gegenläufig zu dem Uhrzeigersinn. Die Drehrichtung **5** ist gegenläufig zu Der Bohrer **1** kann dazu in eine Handwerkzeugmaschine eingesetzt werden, welche einen entsprechenden Drehantrieb aufweist. Ein Schlagwerk der Handwerkzeugmaschine schlägt periodisch auf eine Schlagfläche **7** an der freiliegenden Stirnfläche des Einsteckendes **4.** Die Stoßwelle der Schläge läuft durch die Wendel **3** in Schlagrichtung **8** zu dem Bohrkopf **2.** Der Bohrkopf **2** zertrümmert den Werkstoff. Die Drehbewegung stellt erstens sicher, dass der Bohrkopf **2** unter verschiedenen Orientierungen auf den Untergrund aufschlägt und das Bohrloch gleichmäßig ausgeschlagen wird, und bewirkt bei dem dargestellten Bohrer **1** mit Wendel **3** einen Abtransport des Bohrguts aus dem Bohrloch mittels der (Transport-) Wendel **3.** Anstelle einer Wendel **3** kann der Bohrer **1** einen hohlzylindrischen Schaft aufweisen. Das Bohrgut wird durch den hohlen Schaft **3** mittels eines Gebläses von dem Bohrkopf **2** abgesaugt.

Der Körper des Bohrkopfs **2** hat eine gerad-prismatische Grundgestalt mit einer beispielsweise sternförmigen Basisfläche. Die Grundgestalt erhält man durch Verschieben der Basisfläche parallel zu der Drehachse **6.** Die Basisfläche entspricht der Draufsicht auf den Bohrkopf **2,** d.h. dem Schattenriss einer Oberseite **9.** Die Drehachse **6** verläuft zentrisch durch die Basisfläche, ergo zentrisch durch eine Unterseite **10** und die Oberseite **9** des Bohrkopfs **2.**

Eine Oberfläche des Bohrkopfs **2** setzt sich aus der in die Schlagrichtung **8** weisenden Oberseite **9,** die der Oberseite **9** gegenüberliegenden Unterseite **10** und ein die Oberseite **9** mit der Unterseite **10** verbindenden Mantel **11** zusammen. Die Oberseite **9** ist strukturiert und weist eine Spitze **12** und mehrere Meißelkanten **13** auf. Die Spitze **12** liegt vorzugsweise auf der Drehachse **6.** Die Oberseite **9** dient dem Aufbrechen und Abbauen von Gestein oder anderen mineralischen Bauwerkstoffen. Der Abbau erfolgt insbesondere durch schlagendes Eintreiben der Oberseite **9** in die spröden Werkstoffe. Die Unterseite **10** ist beispielsweise eben, konkav oder konvex gewölbt. Die Unterseite **10** liegt an der Wendel **3** oder einem anderen z.B. zylindrischen Schaft an. Die Unterseite **10** wird beispielsweise mit der Wendel **3** verschweißt oder verlötet. Ferner kann der Schaft mit einem Schlitz zur formschlüssigen Aufnahme des Bohrkopfs **2** versehen sein. Der Mantel **11** ist eine zusammenhängende den Bohrkopf **2** umfänglich umschließende Fläche. Der Mantel **11** setzt sich aus längs, vorzugsweise parallel zu der Drehachse **6,** orientierten Flächen zusammen.

Die Grundgestalt des Körpers kann geometrisch in einen kompakten, konvexen Rumpf **14** und mehrere Arme **15** unterteilt werden. Der kompakte Rumpf **14** enthält keine Hohlräume. Die Arme **15** sind in Drehrichtung **5** durch Abführöffnungen **16** separiert. Der Rumpf **14** kann beispielsweise als der größte Zylinder (gestrichelt dargestellt) angenommen werden, der sich vollständig in die Grundgestalt einschreiben lässt. Der Rumpf **14** liegt auf der Drehachse **6.** Die Spitze **12** des Bohrkopfs **2** ist vorzugsweise Teil des Rumpfs **14.**

Die Arme **15** stehen in unterschiedlichen Richtungen von dem Rumpf **14** ab. Die Arme **15** sind um den Rumpf **14** und entsprechend um die Drehachse **6** in der Drehrichtung **5** verteilt angeordnet. Der bespielhaft dargestellte Bohrkopf **2** hat vier Arme **15,** alternative Bohrköpfe können zwei bis sechs Arme **15,** vorzugsweise mehr als vier Arme **15** aufweisen. Die Arme **15** können wie dargestellt in gleichen Winkeln **17** um die Drehachse **6** angeordnet sein, d.h. bei dem vier-armigen Bohrkopf **2** in Winkeln **17** von 90 Grad. Der vier-armigen Bohrkopf **2** hat stark bevorzugt eine zwei-zähligen Drehsymmetrie. Die kleinsten Winkel **17** zwischen benachbarten Armen **15** können zwischen 60 Grad und 90 Grad liegen. Der sechs-armige Bohrkopf **2** hat ebenfalls stark bevorzugt eine zwei-zählige Drehsymmetrie und ist vorzugsweise spiegelsymmetrisch. Die kleinsten Winkel **17** zwischen benachbarten Armen **15** liegen zwischen 45 Grad und 60 Grad. Bei einem zwei-armigen, drei-armigen und fünfarmigen Bohrkopf **2** ist die Anordnung mit gleichen Winkeln **17** stark bevorzugt.

Die Arme **15** gehen in den Rumpf **14** über. Der Übergangsbereich wird als proximales Ende **18** des Arms **15** bezeichnet. Ein distales Ende **19** des Arms **15** ist der von der Drehachse **6** am weitesten entfernte Bereich des Bohrkopfs **2.** Der radiale Abstand des distalen Endes **19** definiert den (Außen-) Durchmesser **20** und Umkreis **21** des Bohrkopfs **2.** Eine Länge des Arms **15,** d.h. der radiale Abstand **22** des proximalen Ende **18** von dem distalen Ende **19,** ist vorzugsweise größer als 1/6 des Durchmessers **20** des Bohrkopfs **2,** z.B. größer als 1/4 des Durchmessers **20,** und beispielsweise geringer als 3/8 des Durchmessers **20.** Die Arme **15** des beispielhaften Bohrkopfs **2** sind gleich ausgebildet, insbesondere gleich lang.

Die Arme **15** können eine weitgehend quaderförmige Grundform aufweisen. Die beispielhaften Arme **15** haben gegenüberliegende und freiliegende Seitenflächen **23, 24,** welche in die Drehrichtung **5** bzw. entgegen der Drehrichtung **5** weisen. Die Seitenflächen **23, 24** reichen von der Oberseite **9** bis zu der Unterseite **10** und sind vorzugsweise parallel zu der Drehachse **6.** Die Seitenflächen **23, 24** können wie dargestellt eben sein. Die ineinander übergehenden Seitenflächen **23, 24** benachbarter Arme **15** können einen konkaven Abschnitt des Mantels **11** bilden. Eine Breite **25** des Arms **15,** d.h. ein Abstand der Seitenflächen **23,** ist geringer als der Durchmesser des Rumpfs **14.** Die gegenüberliegenden Seitenflächen **23, 24** sind vorzugsweise parallel, weniger als 8 Grad, z.B. weniger als 5 Grad geneigt.

Die distalen Enden **19** der Arme **15** bilden Führungsflächen **26,** welche an der Bohrlochwand anliegen. Die Führungsflächen **26** sind im Wesentlichen tangential zu dem Umkreis **21.** Die Führungsflächen **26** sind Teil des Mantels **11** und vorzugsweise parallel zu der Drehachse **6.** Die Führungsflächen **26** können eben sein, oder in der Ebene senkrecht zu der Drehachse **6** konvex gewölbt sein.

Der Bohrkopf **2** ist mit Abführöffnungen **16** versehen, über welche das an der Oberseite **9** entstehende Bohrgut abtransportiert werden kann. Die Abführöffnungen **16** sind Öffnungen, die innerhalb Umkreises **21** angeordnet von der Oberseite **9** bis zu der Unterseite **10** reichen. Das Bohrgut fließt von der Oberseite **9** in der Abführöffnung **16** in Richtung zu der Unterseite **10** und damit zu dem Schaft **3.** Bei dem beispielhaften Bohrkopf **2** bildet der konkave Abschnitt des Mantels **11** aus den Seitenflächen **23, 24** der Arme **15** die Abführöffnungen **16.** Jedem Arm **15** ist eine solche in Drehrichtung **5** nachfolgende Abführöffnung **16** zugeordnet. Die Abführöffnung **16** trennt in Drehrichtung **5** einen vorrauslaufenden Arm **15** von einem nachlaufenden Arm **15.** Die Abfuhröffnung **16** kann breiter als der Arm **15** sein. Die Abführöffnungen **16** reichen vorzugsweise bis an den Rumpf **14** heran, um das an der Spitze **12** entstehende Bohrgut effizient abzuführen. Ein radialer Abstand **22** der Abführöffnungen **16** von der Drehachse **6** oder Spitze **12** ist vorzugsweise geringer als 1/4 des Durchmessers, z.B. geringer als 1/6 des Durchmessers **20,** beispielsweise größer als 1/8 des Durchmessers **20.**

Die Oberseite **9** hat Arme **15,** die sowohl primäre Meißelkanten **13** als auch sekundäre Meißelkanten **27** aufweisen. Der beispielhafte Bohrkopf **2** hat vier Arme **15** mit jeweils einer primären Meißelkante **13** und einer sekundären Meißelkante **27.**

Die primären Meißelkanten **13** verlaufen von den distalen Enden **19** der Arme **15** in Richtung zu der Spitze **12.** Die Meißelkanten **13** beginnen angrenzend an der Führungsfläche **26.** Bei dem beispielhaften Bohrkopf **2** verlaufen die primären Meißelkanten **13** bis zu der Spitze **12** und erstrecken sich somit über die gesamte radiale Abmessung. Die primären Meißelkanten **13** sind durchgehend und ohne Unterbrechungen. Ein Verlauf der primären Meißelkante **13** kann geradlinig sein, insbesondere über die Länge des Arms **15.** Die primäre Meißelkante **13** kann parallel zu der Seitenfläche **24** verlaufen. Die primäre Meißelkante **13** steigen von dem distalen Ende **19** bis zu der Spitze **12,** vorzugweise kontinuierlich, an.

Die primäre Meißelkante **13** ist die Linie durch die höchsten Punkte des Arms **15** entlang einer radialen Richtung, d.h. von dem distalen Ende **19** zu dem proximalen Ende **18** oder zu der Spitze **12.** Die primäre Meißelkante **13** ist die Schnittlinie einer Spanfläche **28** und einer Freifläche **29.** Die Spanfläche **28** ist gegenüber der Freifläche **29** in Drehrichtung **5** vorauslaufend. Die Spanfläche **28** ist gegenüber der Drehachse **6** geneigt und steigt entgegen der Drehrichtung **5** in Schlagrichtung **8** kontinuierlich an. Die Freifläche **29** weist entgegen die Drehrichtung **5** und fällt entgegen der Drehrichtung **5** in Schlagrichtung **8** kontinuierlich ab. Ein zwischen der Spanfläche **28** und der Freifläche **29** eingeschlossener Dachwinkel **30** ist größer als 45 Grad, vorzugsweise größer 60 Grad und geringer als 120 Grad. Der Dachwinkel **30** gewährleistet einen effektiven Abbau bei einer ausreichenden Standzeit unter den meißelnden und abrasiven Bedingungen.

Die sekundären Meißelkanten **27** sind gegenüber den primären Meißelkanten **13** in der Drehrichtung **5** vorauslaufend versetzt. Die sekundären Meißelkanten **27** beginnen an dem distalen Ende **19** des Arms **15.** Die Meißelkanten **27** beginnen angrenzend an der Führungsfläche **26.** Ihre radiale Abmessung ist geringer als die radiale Abmessung der primären Meißelkanten **13.** Vorzugsweise enden die sekundären Meißelkanten **27** an dem proximalen Ende **18** der Arme **15.** Die sekundären Meißelkanten **27** sind längs der radialen Richtung durchgehend weniger hoch wie die primären Meißelkanten **13,** d.h. ist jedem radialen Abstand zu der Drehachse **6** ist die primäre Meißelkante **13** höher als die sekundäre Meißelkante **27.**

Die sekundäre Meißelkante **27** liegt auf dem gleichen Arm **15** wie die primäre Meißelkante **13.** Ein Abstand **31** zwischen der primären Meißelkante **13** und der sekundären Meißelkante **13** kann annähernd über die gesamte Länge oder zumindest einen Großteil der sekundären Meißelkante **27** konstant sein. Die sekundäre Meißelkante **27** verläuft weitgehend parallel zu der primären Meißelkante **13** desselben Arms **15.** Der Abstand **31** ist geringer als 1/4 des Durchmessers **20,** z.B. geringer als 1/6 des Durchmessers **20,** vorzugsweise größer als 1/8 des Durchmessers **20.** Der Abstand **31** ist insbesondere geringer als der Durchmessers des Rumpfs **14.**

Die sekundäre Meißelkante **27** verläuft durch lokale Höhenmaxima entlang einer radialen Richtung. Die sekundäre Meißelkante **27** kann in Richtung zu der Spitze **12** kontinuierlich ansteigen. Die sekundäre Meißelkante **27** ist gleich der primären Meißelkante **13** durch die Schnittlinie einer vorauslaufenden Fläche **32** und einer nachlaufenden Fläche **33** gebildet. Die vorauslaufende Fläche **32** steigt entgegen der Drehrichtung **5** in Schlagrichtung **8** an, die nachlaufende Fläche **33** fällt entgegen der Drehrichtung **5** in Schlagrichtung **8** ab. Ein Dachwinkel zwischen den beiden Flächen **32, 33** ist größer als 45 Grad, vorzugsweise größer 60 Grad und geringer als 120 Grad.

Zwischen der primären Meißelkante **13** und der sekundären Meißelkante **13** ist eine Rinne **34** ausgebildet. Die Rinne **34** wird durch die Freifläche **29** und die vorauslaufende Fläche **32** eingeschlossen. Die Rinne **34** beginnt an dem distalen Ende **19** und verläuft vorzugsweise bis zu dem proximalen Ende **18** des Arms **15.** Eine Länge der Rinne **34** ist gleich der Länge der sekundären Meißelkante **27.** Die Rinne **34** verläuft auf dem Arm **15** und ist dadurch entgegen der Schlagrichtung **8** geschlossen.

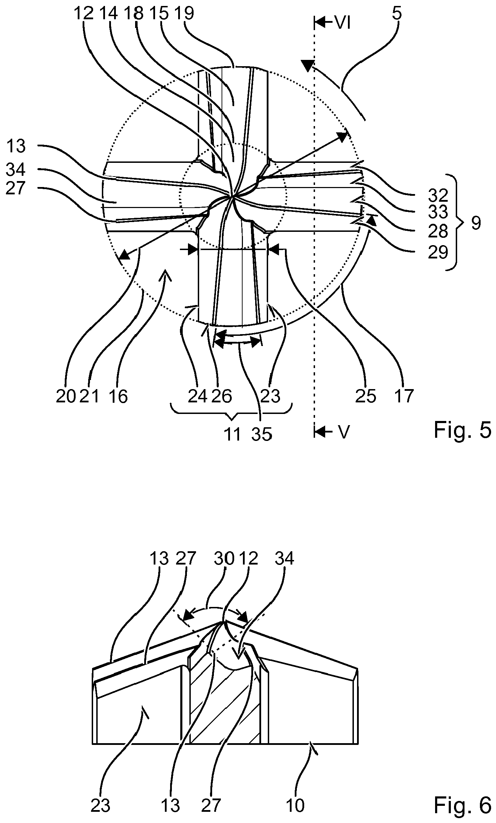

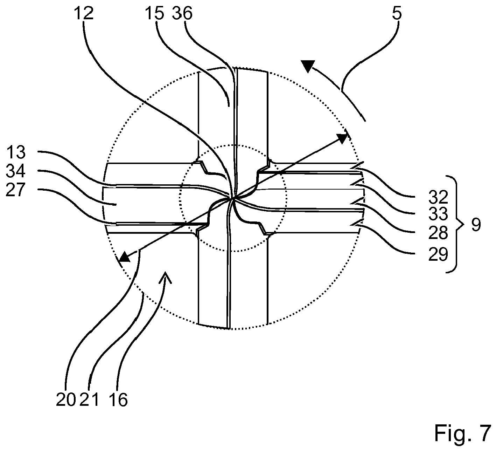

Die primären Meißelkanten **13** können gegenüber den sekundären Meißelkanten **27** geneigt verlaufen. Ein Winkel **35** zwischen der primären Meißelkante **13** und der sekundären Meißelkante **27** ist gering und vorzugsweise geringer als 8 Grad, z.B. geringer als 5 Grad (Fig. 5). Die Ebenen der beiden Meißelkanten **13, 27** schneiden sich von dem Arm **15** aus gesehen hinter der Drehachse **6.** Der Bohrkopf **2** kann eine vier-zählige Drehsymmetrie aufweisen. In alternativen Ausführungsformen sind die diametral gegenüberliegenden Arme **15** identisch ausgebildet und verschieden zu den benachbarten Armen **15.** Beispielsweise hat ein Paar Arme **15** eine geringere Länge als das andere Paar Arme **15.** Ferner können zwei der Arme **15** mit jeweils einer primären Meißelkante **13** und einer sekundären Meißelkante **27** und die anderen zwei Arme **15** nur mit einer primären Meißelkante **36** versehen sein Fig. 7.

Der Bohrkopf **2** ist vorzugsweise aus einem gesinterten Werkstoff, insbesondere Wolframkarbid, hergestellt. Der Bohrkopf **2** ist vorzugsweise monolithisch, d.h. die Arme **15** und der Rumpf **14** sind ohne Fügezone miteinander verbunden, insbesondere ohne Schweißnaht, Lötnaht oder Verschraubung.

Die Wendel **3** des Bohrers **1** hat beispielsweise vier Wendelstege **37.** Die Anzahl der Wendelstege **37** ist vorzugsweise gleich der Anzahl der Arme **15.** Die Wendelstege **37** laufen längs der Drehachse **6** mehrfach um diese Drehachse **6** um. Die Wendelstege **37** beschreiben beim Drehen des Bohrers **1** eine zylindrische Einhüllende, deren Durchmesser einem Wendeldurchmesser entspricht. Jeweils benachbarte Wendelstege **37** schließen zwischen sich eine Wendelnut **38** ein, die in radialer Richtung durch die Einhüllende als geometrisch begrenzt angesehen wird. Das Bohrgut wird in den Wendelnuten **38** durch die Wendelstegen **37** längs der Drehachse **6** transportiert. Eine Wendelsteigung **39** liegt vorzugsweise im Bereich zwischen 35 Grad und 60 Grad, z.B. 45 Grad.

Das beispielhafte Einsteckende **4** des Bohrers **1** ist für die Verwendung von drehmeißelnden Handwerkzeugmaschinen ausgelegt. Das Einsteckende **4** hat eine im Wesentlichen zylindrische Form. Das Einsteckende **4** hat zwei geschlossene Verriegelungsnuten **40,** in welchen Verriegelungselemente der Handwerkzeugmaschine radial eingreifen und längs der Drehachse **6** gleiten können. Zur Drehachse **6** längs ausgerichtete Rillen **41** ermöglichen ein Einleiten eines Drehmoments von der Handwerkzeugmaschine.

## Patentansprüche

1. Bohrkopf (2) für einen Bohrer (1) mit
einer Oberseite (9) zum Abbauen von mineralischem Material,
einer Unterseite (10) zum Befestigen an einem Schaft (3) des Bohrers (1),
einer Drehachse (6), welche zentrisch durch die Oberseite (9) und die Unterseite (10) verläuft,
Armen (15), die jeweils ein zu der Drehachse (6) proximales Ende (18) und zu der Drehachse (6) distales Ende (19) aufweisen, und wobei die Oberseiten (9) der Arme (15) jeweils in Richtung von dem proximalen Ende (18) zu dem distalen Ende (19) verlaufende primäre Meißelkanten (13) aufweisen, **dadurch kennzeichnet dass** wenigstens einer der Arme (15) an der Oberseite (9) eine längs der primären Meißelkante (13) verlaufende sekundäre Meißelkante (27) aufweist.

2. Bohrkopf (2) nach Anspruch 1, **dadurch kennzeichnet dass** die primären Meißelkante (13) und die sekundäre Meißelkante (27) desselben Arms (15) an dem distalen Ende (19) des Arms (15) beginnen.

3. Bohrkopf (2) nach Anspruch 1 oder 2, **dadurch kennzeichnet dass** die primäre Meißelkante (13) gegenüber der sekundären Meißelkante (27) desselben Arms (15) in Schlagrichtung (8) durchgehend übersteht.

4. Bohrkopf (2) nach einem der vorhergehenden Ansprüche, **dadurch kennzeichnet, dass** die primäre Meißelkante (13) gegenüber der sekundären Meißelkante (27) desselben Arms (15) in einer Drehrichtung (5) des Bohrkopfs (2) vorauslaufend versetzt ist.

5. Bohrkopf (2) nach einem der vorhergehenden Ansprüche, **dadurch kennzeichnet, dass** die primäre Meißelkante (13) zu der sekundäre Meißelkante (27) desselben Arms (15) parallel verläuft.

6. Bohrkopf (2) nach einem der vorhergehenden Ansprüche, **dadurch kennzeichnet, dass** die primären Meißelkante (13) an einer Spitze (12) des Bohrkopfs (2) endet und die sekundäre Meißelkante (27) vor der Spitze (12) endet.

7. Bohrkopf (2) nach einem der vorhergehenden Ansprüche, **dadurch kennzeichnet, dass** die primäre Meißelkante (13) und die sekundäre Meißelkante (27) zwischen sich eine Rinne (34) an der Oberseite (9) des Arms (15) begrenzen.

8. Bohrkopf (2) nach einem der vorhergehenden Ansprüche, **dadurch kennzeichnet, dass** in Drehrichtung (5) zwischen benachbarten Armen (15) jeweils eine Abführöffnungen (16) zum Abführen von Bohrgut angeordnet ist.

9. Bohrkopf (2) nach einem der vorhergehenden Ansprüche, **dadurch kennzeichnet, dass** ein Winkel (35) zwischen der primären Meißelkante (13) und der sekundären Meißelkante (27) desselben Arms (15) geringer als 8 Grad ist.

10. Bohrkopf (2) nach einem der vorhergehenden Ansprüche, **dadurch kennzeichnet, dass** der Bohrkopf (2) wenigstens vier Arme (15) aufweist.

11. Bohrkopf (2) nach einem der vorhergehenden Ansprüche, **dadurch kennzeichnet, dass** der Bohrkopf (2) in einen Rumpf (14) und die Arme (15) aufgeteilt ist, wobei der Rumpf (14) den größten Zylinder bezeichnet, welcher koaxial zu der Drehachse (6) angeordnet vollständig in den Bohrkopf (2) einschreibbar ist.

12. Bohrer (1) mit einem Bohrkopf (2) nach einem der vorhergehenden Ansprüche, einem Schaft (3), der mit der Unterseite (10) des Bohrkopfs (2) verschweißt oder verlötet ist und einem Einsteckende (4) mit einer geschlossenen Verriegelungsnut.
